# EUROPEAN PATENT APPLICATION

(11) **EP 4 509 967 A1**
(43) Date of publication of application: **19.02.2025**
(21) Application number: 23787707.1
(22) Date of filing: 11.04.2023
(51) Int. Cl.: G06F 3/04817, G06F 9/445

(54) **APPLICATION PROGRAM STARTING METHOD AND APPARATUS, AND ELECTRONIC DEVICE AND STORAGE MEDIUM**

(30) Priority: 15.04.2022 CN 202210400073
(71) Applicant: Vivo Mobile Communication Co., Ltd., Dongguan, Guangdong 523863 (CN)
(72) Inventor: LI, Wei, Dongguan, Guangdong 523863 (CN)
(74) Representative: Murgitroyd & Company
(86) International application number: PCT/CN2023/087629
(87) International publication number: WO 2023/198064

(57) **Abstract**

This application discloses an application program startup method and apparatus, an electronic device, and a storage medium, and pertains to the field of communication technologies. The method includes: displaying a target folder, where a first area of the target folder displays a first icon, and a second area of the target folder displays a second icon; receiving a first input for a target icon; and in a case that the first icon includes the target icon, in response to the first input, displaying a first screen of an application program corresponding to the target icon; or in a case that the second icon includes the target icon, in response to the first input, displaying an expansion screen of the target folder.

## Description

### CROSS-REFERENCE TO RELATED APPLICATION

This application claims priority to Chinese Patent Application No. 202210400073.4, filed in China on April 15, 2022, which is incorporated herein by reference in its entirety.

### TECHNICAL FIELD

This application pertains to the field of communication technologies, and specifically relates to an application program startup method and apparatus, an electronic device, and a storage medium.

### BACKGROUND

At present, electronic devices can display the name of a desktop folder in a preset area (for example, below the desktop folder), so that a user can quickly identify the folder directly through the name of the desktop folder, and then start the required application program.

However, after the user finds a required folder through the name of the desktop folder, the user needs to tap the folder so that the electronic device opens the folder for the user to find a required application program in the folder and start the application program. This requires cumbersome and time-consuming user operations, resulting in low efficiency and convenience of the electronic device in starting the application program in the folder.

### SUMMARY

Embodiments of this application are intended to provide an application program startup method and apparatus, an electronic device, and a storage medium, so as to solve the problem of low efficiency and convenience of the electronic device in starting an application program in a folder.

According to a first aspect, an embodiment of this application provides an application program startup method. The application program startup method includes: displaying a target folder, where a first area of the target folder displays a first icon, and a second area of the target folder displays a second icon; receiving a first input for a target icon; and in a case that the first icon includes the target icon, in response to the first input, displaying a first screen of an application program corresponding to the target icon; or in a case that the second icon includes the target icon, in response to the first input, displaying an expansion screen of the target folder.

According to a second aspect, an embodiment of this application provides an application program startup apparatus. The application program startup apparatus includes: a display module, a receiving module, and a processing module. The display module is configured to display a target folder, where a first area of the target folder displays a first icon, and a second area of the target folder displays a second icon. The receiving module is configured to receive a first input for a target icon. The processing module is configured to: in a case that the first icon includes the target icon, in response to the first input received by the receiving module, display a first screen of an application program corresponding to the target icon; or in a case that the second icon includes the target icon, in response to the first input received by the receiving module, display an expansion screen of the target folder.

According to a third aspect, an embodiment of this application provides an electronic device. The electronic device includes a processor and a memory. The memory stores a program or instructions executable on the processor. When the program or instructions are executed by the processor, the steps of the method according to the first aspect are implemented.

According to a fourth aspect, an embodiment of this application provides a readable storage medium, where the readable storage medium stores a program or instructions, and when the program or instructions are executed by a processor, the steps of the method according to the first aspect are implemented.

According to a fifth aspect, an embodiment of this application provides a chip, where the chip includes a processor and a communication interface, the communication interface is coupled to the processor, and the processor is configured to run a program or instructions so as to implement the method according to the first aspect.

According to a sixth aspect, an embodiment of this application provides a computer program product, where the program product is stored in a storage medium, and the program product is executed by at least one processor to implement the method according to the first aspect.

In the embodiments of this application, when the electronic device displays the target folder, the target folder can be displayed in the form of the first area and the second area, so as to indicate to the user the application signs for directly starting the application programs. In this way, the user can directly perform the first input for an application icon (such as the target icon) in the first area of the target folder to cause the electronic device to directly start the application program indicated by the target application icon, instead of opening the folder first and then performing an input for the application icon in the folder to cause the electronic device to start the application program. This simplifies the operation of starting the application program by the user, saving time, and improving the efficiency and convenience of starting the application program in the folder by the electronic device.

### BRIEF DESCRIPTION OF DRAWINGS

FIG. 1 is a flowchart of an application program startup method according to an embodiment of this application;
FIG. 2 is a first schematic diagram of an example of a screen of an electronic device according to an embodiment of this application;
FIG. 3 is a second schematic diagram of an example of a screen of an electronic device according to an embodiment of this application;
FIG. 4 is a third schematic diagram of an example of a screen of an electronic device according to an embodiment of this application;
FIG. 5 is a fourth schematic diagram of an example of a screen of an electronic device according to an embodiment of this application;
FIG. 6 is a fifth schematic diagram of an example of a screen of an electronic device according to an embodiment of this application;
FIG. 7 is a sixth schematic diagram of an example of a screen of an electronic device according to an embodiment of this application;
FIG. 8 is a seventh schematic diagram of an example of a screen of an electronic device according to an embodiment of this application;
FIG. 9 is an eighth schematic diagram of an example of a screen of an electronic device according to an embodiment of this application;
FIG. 10 is a ninth schematic diagram of an example of a screen of an electronic device according to an embodiment of this application;
FIG. 11 is a schematic structural diagram of an application program startup apparatus according to an embodiment of this application;
FIG. 12 is a first schematic diagram of a hardware structure of an electronic device according to an embodiment of this application; and
FIG. 13 is a second schematic diagram of a hardware structure of an electronic device according to an embodiment of this application.

### DESCRIPTION OF EMBODIMENTS

The technical solutions in the embodiments of this application will be described clearly and completely in the following in conjunction with the accompanying drawings in the embodiments of this application, and it is obvious that the described embodiments are a part of the embodiments of this application, not all of the embodiments. Based on the embodiments in this application, all other embodiments obtained by persons of ordinary skill in the art without making creative labor fall within the scope of protection of this application.

The terms "first", "second", and the like in this specification and claims of this application are used to distinguish between similar objects rather than to describe a specific order or sequence. It should be understood that data used in this way is used interchangeably in appropriate circumstances so that the embodiments of this application can be implemented in other orders than the order illustrated or described herein. In addition, "first" and "second" are usually used to distinguish objects of a same type, and do not restrict a quantity of objects. For example, there may be one or a plurality of first objects. In addition, "and/or" in the specification and claims represents at least one of connected objects, and the character "/" generally indicates that the associated objects have an "or" relationship.

The following describes in detail the application program startup method provided in the embodiments of this application through specific embodiments and application scenarios thereof with reference to the accompanying drawings.

With the development of communication technology, there are more and more application programs in electronic devices, and the location resources occupied by application icons on the desktop of electronic devices are also increasing. Usually, a user can create folders on the desktop and move the application icons on the desktop to the folders, thus ensuring the simplicity of the desktop of electronic devices and improving the efficiency of finding application programs by the user. In related technologies, to enable users to quickly and accurately find the required application programs through folders, the name of the desktop folder is usually displayed in the preset area of the icon of the desktop folder (for example, below the icon), or a preview of the internal layout on icons of the desktop folder is presented to users. In this way, users can quickly find the folder where the required application program is located through the name or icon preview of the desktop folder.

However, in the foregoing method, after a user finds the required folder, the user needs to tap the folder so that the electronic device opens the folder for the user to find a required application icon in the folder and start the application program. This requires cumbersome and time-consuming user operations, resulting in low efficiency and convenience of the electronic device in starting the application program in the folder.

In an embodiment of this application, the electronic device can display a target folder, where the target folder includes a first area and a second area, a first icon is displayed in the first area, and a second icon is displayed in the second area; and in a case that the electronic device has detected a first input of a user on a target icon in the first area, the electronic device can directly start an application program indicated by the target application icon; or in a case that the electronic device has detected a first input of the user on a target icon in the second area, the electronic device can open the target folder. In this solution, when the electronic device displays the target folder, the target folder can be displayed in the form of the first area and the second area, so as to indicate to the user the application signs for directly starting the application programs. In this way, the user can directly perform the first input for an application icon (such as the target icon) in the first area of the target folder to cause the electronic device to directly start the application program indicated by the target application icon, instead of opening the folder first and then performing an input for the application icon in the folder to cause the electronic device to start the application program. This simplifies the operation of starting the application program by the user, saving time, and improving the efficiency and convenience of starting the application program in the folder by the electronic device.

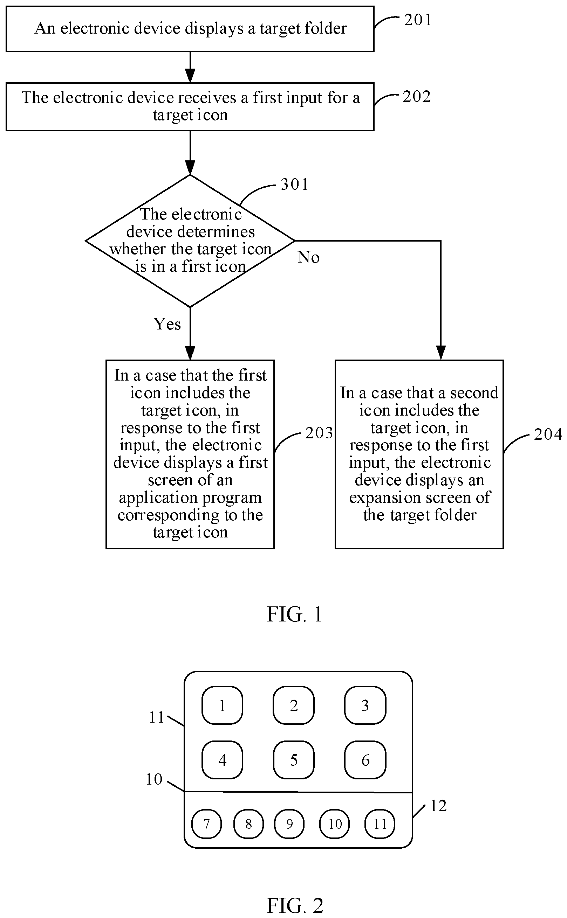

An embodiment of this application provides an application program startup method. FIG. 1 is a flowchart of an application program startup method according to an embodiment of this application. As shown in FIG. 1, the application program startup method provided in the embodiment of this application may include the following steps 201 to 203 or the following steps 201, 202, and 204.

Step 201: An electronic device displays a target folder.

In the embodiment of this application, a first area of the target folder displays a first icon, and a second area of the target folder displays a second icon.

Optionally, in the embodiment of this application, a user can perform input for a folder creation control in desktop editing mode so that the electronic device creates the target folder and displays it on the desktop of the electronic device; or the user can drag a first target icon on the desktop (the first target icon can be any icon on the desktop of the electronic device) so that the first target icon is overlaid on a second target icon (the second target icon is an application icon other than the first target icon), and then create the target folder and display it on the desktop of the electronic device; or the user can perform input for an original folder displayed on the desktop to trigger the electronic device to adjust the original folder to the target folder.

It should be noted that the above target folder can be a large folder, where the large folder is larger than any application icon in size. Specifically, taking the size of an application icon as 1x1 as an example, the size of the large folder can be 1x2, 2x2, 2x4, or the like. The specific size of the large folder can be determined according to the actual situation, and is not limited in the embodiments of this application.

Optionally, in the embodiment of this application, one or more first icons may be provided, and one or more second icons may be provided. The specific quantities of first icons and second icons can be determined according to the actual situation, and are not limited in the embodiments of this application.

For example, as shown in FIG. 2, the target folder 10 includes a first area 11 and a second area 12, where the first area 11 displays 6 first icons and the second area 12 displays 5 second icons. A user can perform a first input for a target icon (for example, application icon 2) in the first icon, so that the electronic device can start an application program corresponding to application icon 2 and display a first screen of the application program corresponding to application icon 2; or the user can perform a first input for a target icon (for example, application icon 8) in the second area to trigger the electronic device to expand the target folder.

Optionally, in the embodiment of the application, the first icon in the first area can be determined by at least one of the following: an icon corresponding to an application program with usage times/frequency meeting a first preset threshold in the target folder, an application icon selected by the user from the target folder, the top L (for example, preset by the electronic device or preset by the user) application icons determined according to an original display order of application icons in the target folder, and an application icon selected by the user from icons of desktop/recommended application programs.

Optionally, in the embodiment of the application, the application icons displayed in the target folder (that is, the first icon and the second icon) may be displayed in the first area and the second area in a first order.

Optionally, in the embodiment of this application, the first order may be a default display order of the target folder, an order determined by the electronic device according to the usage times/frequency by the user, or an order adjusted by the user.

Optionally, in the embodiment of this application, a size of the first icon may be different from a size of the second icon. For example, the size of the first icon may be larger than the size of the second icon or the size of the first icon may be smaller than the size of the second icon.

Optionally, in the embodiment of this application, the electronic device can dynamically adjust the quantities of application icons displayed in the first area and the second area according to the quantity of application icons in the target folder.

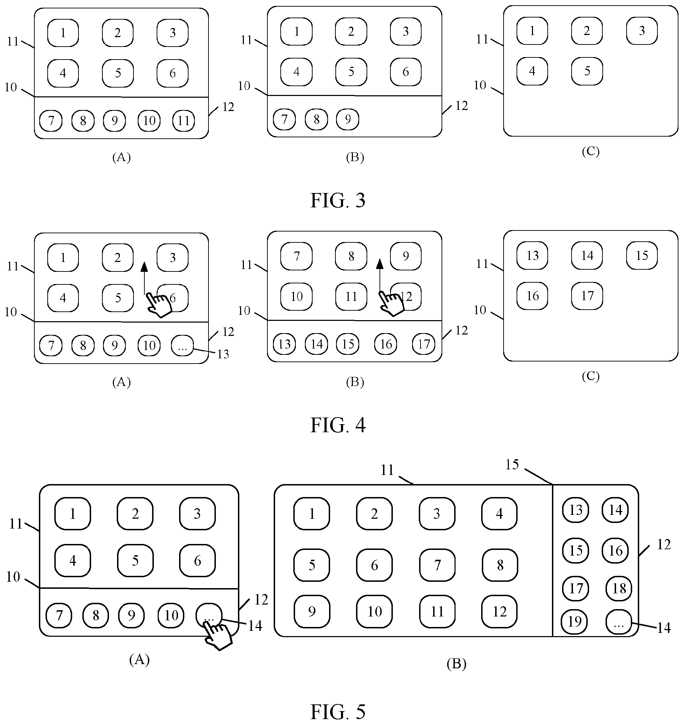

For example, in combination with FIG. 2, as shown in FIG. 3(A), if the quantity of application icons in the target folder 10 is greater than a second preset threshold (for example, 12), the electronic device can display 6 first icons (that is, application icons 1 to 6 shown in FIG. 3(A)) in the first area 11 of the target folder 10 and 5 second icons (that is, application icons 7 to 11 shown in FIG. 3(A)) in the second area 12. As shown in FIG. 3(B), if the quantity of application icons in the target folder 10 is less than or equal to a second preset threshold and greater than a third preset threshold (for example, 6), the electronic device can display 6 first icons (that is, application icons 1 to 6 shown in FIG. 3(B)) in the first area 11 of the target folder 10 and 3 second icons (that is, application icons 7 to 9 shown in FIG. 3(B)) in the second area 12. As shown in FIG. 3(C), if the quantity of application icons in the target folder 10 is less than or equal to the third preset threshold, the electronic device can display 5 first icons (that is, application icons 1 to 5 shown in FIG. 3(C)) in the first area 11 of the target folder 10 and no icons in the second area 12. Optionally, in a case that the quantity of application icons in the target folder 10 is less than or equal to the third preset threshold, the second area 12 in the target folder can be canceled.

Step 202: The electronic device receives a first input for a target icon.

Optionally, in the embodiment of this application, the first input may be any one of the following: tap input, long-press input, heavy-press input, preset trajectory input, physical button combination input (such as the power button and volume button), or any possible form of input, which can be specifically determined according to actual use requirements, and is not limited in the embodiments of this application.

Optionally, in the embodiment of this application, before the above step 203, the application program startup method provided in the embodiment of this application further includes the following step 301.

Step 301: The electronic device determines whether the target icon is in the first icon.

In the embodiment of this application, the electronic device can detect a position of the first input of the user, so as to determine whether the user has performed the first input for the target icon in the first icon or the target icon in the second icon.

Optionally, in the embodiment of this application, the electronic device includes associations between different inputs and different icons, and the electronic device can obtain, based on the associations, whether the target icon corresponding to the first input is an icon in the first icon or an icon in the second icon.

Step 203: In a case that the first icon includes the target icon, in response to the first input, the electronic device displays a first screen of an application program corresponding to the target icon.

In the embodiment of this application, in a case that the electronic device detects that the user has performed the first input for the target icon in the first icon, the electronic device can directly start the application program indicated by the target icon according to the user input for the target icon. That is, if the user performs the first input for the target icon in the first icon, the electronic device can directly start the application program indicated by the target icon without opening the target folder.

Optionally, in the embodiment of this application, the target application icon may be provided in one or in plurality.

Step 204: In a case that the second icon includes the target icon, in response to the first input, the electronic device displays an expansion screen of the target folder.

In the embodiment of this application, in a case that the electronic device detects that the user has performed the first input for the target icon in the second icon, the electronic device can expand the target folder, so that the user can view the first icon and second icon in the target folder. That is, if the user performs the first input for the target icon in the second area, the electronic device can expand the target folder and display the first icon and second icon in the target folder to the user.

Optionally, in the embodiment of this application, in a case that the electronic device detects that the user has performed the first input for the target icon in the second icon, the electronic device can expand the target folder, so that the user can view the first icon, second icon, and undisplayed icon (that is, a third icon described below) in the target folder. The electronic device can expand the target folder and display all icons in the target folder to the user.

Optionally, in the embodiment of this application, the target folder may include an expansion control, and the user can perform an input for the expansion control so that the electronic device expands the target folder. Specifically, the second area of the target folder may include the expansion control, so that the user can perform an input for the expansion control in the second area to cause the electronic device to expand the target folder.

It can be understood that the target folder includes a first area with a first operation mode and the second area with a second operation mode, where the first operation mode is an operation mode allowing direct opening of an application program, and the second operation mode is an operation mode allowing indirect opening of an application program.

In the application program startup method according to the embodiment of this application, the electronic device can display a target folder, where the target folder includes a first area and a second area, a first icon is displayed in the first area, and a second icon is displayed in the second area; and in a case that the electronic device has detected a first input of a user on a target icon in the first area, the electronic device can directly start an application program indicated by the target application icon; or in a case that the electronic device has detected a first input of the user on a target icon in the second area, the electronic device can open the target folder. In this solution, when the electronic device displays the target folder, the target folder can be displayed in the form of the first area and the second area, so as to indicate to the user the application signs for directly starting the application programs. In this way, the user can directly perform the first input for an application icon (such as the target icon) in the first area of the target folder to cause the electronic device to directly start the application program indicated by the target application icon, instead of opening the folder first and then performing an input for the application icon in the folder to cause the electronic device to start the application program. This simplifies the operation of starting the application program by the user, saving time, and improving the efficiency and convenience of starting the application program in the folder by the electronic device.

Optionally, in the embodiment of this application, the target folder includes a third icon, and the target folder does not display the third icon; and after the step 203, the application program startup method provided in the embodiment of this application further includes the following steps 401 and 402.

Step 401: The electronic device receives a second input for a first sub-icon in the first icon.

In the embodiment of this application, in a case that there is one first icon, the first sub-icon is the same as the first icon; and in a case that there are multiple first icons, the first sub-icon is one or more of the first icons.

Optionally, in the embodiment of this application, the second input may be any one of the following: tap input, long-press input, heavy-press input, preset trajectory input, physical button combination input (such as the power button and volume button), or any possible form of input, which can be specifically determined according to actual use requirements, and is not limited in the embodiments of this application.

Step 402: In response to the second input, the electronic device cancels display of the first sub-icon, displays a second sub-icon in the second icon at a first position, and displays the third icon at a second position.

In the embodiment of this application, the first position is a display position of the first sub-icon before the display is canceled, and the second position is a display position of the second sub-icon in the second area.

In the embodiment of this application, the electronic device can display the second sub-icon of the second area in the first area based on the second input of the user, so that the user can directly open the second sub-icon in the first area and browse the third icon not displayed in the target folder in the second area. That is, based on the second input of the user, the electronic device can display the second sub-icon of the second area in the first area and browse the third icon of the target folder in the second area without opening the folder.

Optionally, in the embodiment of this application, the second input may be a slide input, and the electronic device receives the slide input from the user and moves the second sub-icon in the second area to the first area. In this case, there is a vacancy in the second area, and the electronic device controls the third icon not displayed in the target folder to be displayed in the vacancy of the second area.

Optionally, in the embodiment of this application, the third icon may be one or more icons that are not displayed.

Optionally, in the embodiment of this application, the first icons and the second icons are arranged in sequence, the electronic device moves the second sub-icon in the second area to the first area, and then the first icons in the first area move forward in sequence or the icons in the first area that are in front of a placement position of the second sub-icon move forward in sequence according to the placement position. In this case, an icon in the first place among the first icons can be hidden.

Optionally, in the embodiment of this application, after there is a vacancy in the second area, the icons behind the vacancy in the second icon can move forward in sequence, so that a second vacancy is formed behind the second icon, and the second vacancy is used for placing the third icon.

Optionally, in the embodiment of this application, the third icon may include at least one of the following: an application icon that is present in the target folder but is not displayed in the first area or the second area, that is, a hidden application icon; or an encrypted icon, that is, an application icon that is hidden after encryption.

Optionally, in the embodiment of this application, in a case that the third icon is an application icon that is present in the target folder but is not displayed in the first area or the second area, when the electronic device displays an expansion screen of the target folder, the third icon is displayed in the expansion screen; or in a case that the third icon is a hidden application icon, when the electronic device displays an expansion screen of the target folder, the third icon is not displayed in the expansion screen.

Optionally, in the embodiment of this application, the first sub-icon, the second sub-icon, and the third icon may each be provided in one or in plurality; and the quantities of first sub-icons, second sub-icons, and third icons may be equal or unequal.

For example, it is assumed that there are 13 application icons in the target folder, the target folder includes a first area and a second area, the first area can display 6 first sub-icons, and the second area can display 4 second sub-icons and an expansion control. The user can perform an input for the expansion control to view 3 third icons that are not displayed.

Optionally, in the embodiment of this application, the target folder further includes a target control, and the target control is used to unlock the hidden third icon.

For example, a ninth input of the user for the target control is received, and in response to the ninth input, a password input screen is displayed; a tenth input of the user is received, and in response to the tenth input, information input by the user is displayed; and in a case that the information input by the user matches preset information, the hidden third icon is displayed.

Optionally, in the embodiment of this application, the first sub-icon may be the first row of application icons in the first area, the first K (for example, a value preset by the user or a value preset by the electronic device) rows of application icons in the first area, or all application icons currently displayed in the first area.

Optionally, in the embodiment of this application, the second sub-icon may be the first N application icons in the second area, application icons with usage times/frequency/duration greater than a first preset threshold, or application icons associated with the first sub-icon in the second area.

Optionally, in the embodiment of this application, the second sub-icons may be displayed in the first area in a second order.

Optionally, in the embodiment of this application, the second order may be any one of the following: an order in which the second sub-icons are displayed in the second area, an order determined by the electronic device according to the usage times/frequency by the user, or an order adjusted by the user.

Optionally, in the embodiment of this application, after the electronic device displays the second sub-icon of the second area in the first area and the third icon in the second area, the user can perform an input for the target folder again so that the target folder returns to an initial display screen (that is, a display screen of the target folder before the electronic device receives the second input).

Optionally, in the embodiment of this application, the user can perform the second input for one first sub-icon so that the electronic device cancels display of the first sub-icon in the first area. In this case, other application icons in the first area are automatically filled in, and the first sub-icon is displayed at a stop position of the second input according to the stop position. Alternatively, the user can perform the second input for one second sub-icon so that the electronic device cancels display of the second sub-icon in the second area. In this case, other application icons in the second area are automatically filled in, and the second sub-icon is displayed at a stop position of the second input according to the stop position. In other words, the electronic device can move one first sub-icon or one second sub-icon to another position in the target folder for display based on the second input of the user.

Optionally, in the embodiment of this application, the stop position of the second input may be the first area or the second area.

For example, the user can perform a drag input for the first sub-icon in the first area so that the electronic device cancels display of the first sub-icon and drags the first sub-icon to a stop position of the drag input (for example, an empty icon position in the second area), so as to move the first sub-icon to the empty icon position in the second area.

Optionally, in the embodiment of this application, the user can perform the above operation multiple times so that multiple first sub-icons can be moved.

It should be noted that for the solutions included in the method, the execution order may not be limited in the specific solutions, for example, step 401 and step 402 may be executed before step 202 or after step 203.

For example, before step 202, if the above step of "receiving a second input for a first sub-icon in the first icon; and in response to the second input, canceling display of the first sub-icon, displaying a second sub-icon in the second icon at a first position, and displaying the third icon at a second position" is performed, the target icon can be understood as one or more application icons in the updated application icons in the first area (that is, after the second sub-icon in the second area is displayed in the first area, one or more of application icons included in the first area are the target icon).

In the embodiment of the application, the electronic device can display the second sub-icon of the second area in the first area and the hidden third icon in the second area based on the second input of the user. In this way, the user can conveniently browse all the application icons in the target folder without opening the target folder, thus simplifying the operation of finding the target icon in the target folder by the user and improving the efficiency and convenience of finding the application program in the folder by the electronic device.

Optionally, in the embodiment of this application, a size of the first icon is a first size, and a size of the second icon is a second size; and the above step 402 can be specifically implemented through the following step 402a.

Step 402a: In response to the second input, the electronic device cancels display of the first sub-icon, displays a second sub-icon in the second icon at a first position, and adjusts a size of the second sub-icon to the first size; and displays the third icon at a second position, and adjusts a size of the third icon to the second size.

Optionally, in the embodiment of this application, after the electronic device receives the second input of the user, the electronic device may cancel the first sub-icon, display the second sub-icon in the first area according to the first size, and display the third icon not displayed in the target folder in the second area according to the second size; or after displaying the second sub-icon in the first area, the electronic device adjusts the size of the second sub-icon according to the first size, displays the third icon not displayed in the target folder in the second area, and adjusts the third icon according to the second size.

For example, it is assumed that the target folder 10 includes 17 application icons. With reference to FIG. 2, as shown in FIG. 4(A), the second area in the target folder includes an expansion control 13, and the user can perform a slide input for the target folder 10. As shown in FIG. 4(B), the electronic device receives the slide input of the user, hides first sub-icons 1 to 6 in the first area 11, adjusts second sub-icons 7 to 12 in the second area 12 to the first size, and displays them in the first area 11. Then the electronic device can adjust the remaining third icons 13 to 17 in the target folder to the second size, display them in the second area 12, and cancel the expansion control 13. Then the electronic device can receive a slide input of the user for the target folder again, adjust third icons 13 to 17 in the target folder to the first size, display them in the first area, and cancel display of the second area, as shown in FIG. 4(C).

In the embodiment of this application, based on the second input of the user, the electronic device can display the second sub-icon of the second area in the first area according to the first size, and display the hidden third icon in the second area according to the second size. In this way, after the second sub-icon is moved to the first area, the icons in the first area are consistent in size, and the screen looks fine, so that the user can quickly identify the required application icon.

Optionally, in the embodiment of this application, the first size may be larger than the second size. Since the first icon located in the first area can lead to direct display of the application program screen through the user input, setting the first icon to a large size makes it convenient for the user to directly start the application program corresponding to the application icon required by the user.

Optionally, in the embodiment of this application, after the step 201, the application program startup method provided in the embodiment of this application further includes the following steps 501 and 502.

Step 501: The electronic device receives a third input for a third sub-icon in the first icon.

Step 502: In response to the third input, the electronic device cancels display of the third sub-icon, displays a fourth sub-icon in the second icon at a third position, and adjusts a size of the fourth sub-icon to the first size; and displays the third sub-icon at a fourth position, and adjusts a size of the third sub-icon to the second size.

In the embodiment of this application, the third position is a display position of the third sub-icon before the display is canceled, and the fourth position is a display position of the fourth sub-icon in the second area.

In the embodiment of this application, the electronic device can exchange the display positions and display sizes of the third sub-icon in the first area and the fourth sub-icon in the second area based on the third input of the user.

For example, the user can perform a drag input for the third sub-icon in the first icon so that the electronic device can cancel display of the third sub-icon at the third position, and then the electronic device can display the third sub-icon adjusted to the second size at the fourth position corresponding to a stop position of the drag input of the user according to the stop position, and display the fourth sub-icon adjusted to the first size at the third position in the first area.

In the embodiment of this application, the electronic device can adjust the position of the third sub-icon in the first area to the fourth position in the second area based on the third input of the user. That is, in a case that the target folder is not opened, the user can perform the third input for the third sub-icon in the target folder, so as to adjust the display position of the third sub-icon in the target folder. In other words, the user can quickly edit the position of the application icon in the target folder at a shallow level without entering the folder, which simplifies the user operation and improves the efficiency of editing the target folder by the electronic device.

Optionally, in the embodiment of this application, a form of the target folder is a first form; and after the step 201, the application program startup method provided in the embodiment of this application further includes the following steps 601 and 602.

Step 601: The electronic device receives a fifth input for the target folder.

Optionally, in the embodiment of this application, the fifth input may be any one of the following: tap input, long-press input, heavy-press input, preset trajectory input, physical button combination input (such as the power button and volume button), or any possible form of input, which can be specifically determined according to actual use requirements, and is not limited in the embodiments of this application.

Step 602: In response to the fifth input, the electronic device adjusts the form of the target folder to a second form.

In the embodiment of this application, the form includes at least one of the following: a size of the target folder, a size of the first area of the target folder, a size of the second area of the target folder, a quantity of icons allowed in the first area of the target folder, a quantity of icons allowed in the second area of the target folder, a position of the first area in a display area of the target folder, and a position of the second area in the display area of the target folder.

Optionally, in the embodiment of this application, after the electronic device responds to the fifth input, a form control can be displayed in the target folder, so that the user can perform a tap input for the form control to trigger the target folder to be updated from the first form to the second form; or after the electronic device responds to the fifth input, the user can perform a drag input for an edge area of the target folder to trigger the target folder to be updated from the first form to the second form.

Optionally, in the embodiment of this application, after the electronic device expands the target folder, the user can perform a drag input for an edge area of the target folder to change the form of the target folder to a third form, and update the quantities of the application icons displayed in the first area and the second area.

Optionally, in the embodiment of this application, the form of the target folder may be any one of the following: rectangle, square, rectangle, rhombus, trapezoid, triangle, and another possible form, which can be specifically determined according to the actual use requirements, and is not limited in the embodiments of this application.

For example, with reference to FIG. 2, as shown in FIG. 5(A), the user can perform a tap input for the form control 14 in the second area. As shown in FIG. 5(B), the electronic device can update the target folder 10 to a second folder 15 based on the tap input. Specifically, based on the tap input of the user for the form control 14, the electronic device can update the sizes of the first area and the second area (for example, the size of the first area 11 in the second folder 15 is larger than the size of the first area in the target folder 10, and the size of the second area in the second folder 15 is larger than the size of the second area in the target folder 10), update the positions of the first area and the second area (for example, update the display positions of the first area and the second area in the second folder 15 from vertical display to horizontal display), and update the quantity of first icons allowed in the first area 11 and the quantity of second icons allowed in the second area 12 (for example, displaying 12 first icons (that is, application icons 1 to 12) in the first area 11 of the second folder 15 and displaying 7 second icons (that is application icons 13 to 19) in the second area 12 of the second folder 15). Optionally, after the target folder 10 is updated to the second folder 15, the user can tap the form control 14 in the second folder 15 again so that the electronic device can update the second folder 15 again, that is, change the form of the second folder 15 again.

In the embodiment of this application, the electronic device can change the form and size of the target folder through the user input, so as to update the application icons displayed in the target folder and the display positions of the first area and the second area, thus improving the efficiency of displaying the application programs in the target folder by the electronic device.

Optionally, in the embodiment of this application, after the step 502, the application program startup method provided in the embodiment of this application further includes the following step 701, 702, or 703.

Step 701: The electronic device updates a display position of a fifth sub-icon in the first icon to the second area based on the second form.

In the embodiment of this application, in a case that the size of the first area in the updated target folder is smaller than the original size of the first area (that is, the size of the first area when the target folder is in the first form), the updated quantity of icons allowed in the first area is smaller than the original quantity of icons allowed in first area (that is, the quantity of icons allowed in the first area when the target folder is in the first form), or the display position of the first area in the target folder changes (that is, update from vertical display to horizontal display), the electronic device can display the fifth sub-icon in the first icon in the second area and adjust a size of the fifth sub-icon to the second size.

Optionally, in the embodiment of this application, the fifth sub-icon may be provided in one or in plurality.

Optionally, the fifth sub-icon may be the first N application icons or the first N rows of application icons in the first icon; or all application icons currently displayed in the first area.

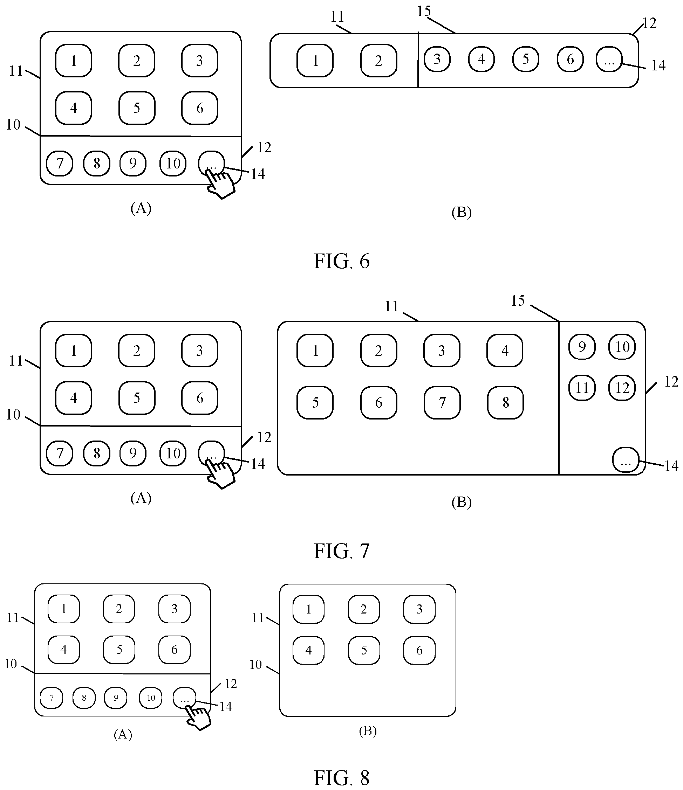

For example, as shown in FIG. 6(A), the first area 11 in the target folder 10 includes 6 first icons, and the second area 12 includes 4 second icons. The user can perform a tap input for the form control 14 so that the electronic device can update the target folder from the first form to the second form. In this case, as shown in FIG. 6(B), the first area 11 in the second folder 15 includes 2 first icons and the second area 12 includes 4 second icons, where the 4 second icons in the second area 12 are the last 4 first icons of the first area.

Optionally, in the embodiment of this application, in a case that the form of the target folder is updated to the second form, the electronic device can detect the target folder in the second form. When it is detected that the sizes of the updated first area and second area have changed (for example, the size of the updated first area is smaller than the original size of the first area (that is, the size of the first area when the target folder is in the first form) and the size of the updated second area is smaller than the original size of the second area (that is, the size of the second area when the target folder is in the first form)), or the quantities of application icons allowed in the updated first area and the updated second area changes (for example, the quantity of application icons allowed in the first area of the target folder in the second form is smaller than the quantity of application icons allowed in the first area of the target folder in the first form, and the quantity of application icons allowed in the second area of the target folder in the second form is smaller than the quantity of application icons allowed in the second area of the target folder in the first form), or the relative positions of the first area and the second area changes (that is, update from vertical display to horizontal display), the electronic device can display the fifth sub-icon in the first icon in the second area and hide the sixth sub-icon in the target folder.

Step 702: The electronic device updates a display position of a sixth sub-icon in the second icon to the first area.

In the embodiment of this application, in a case that the size of the first area in the updated target folder is greater than the size of the original first area, the quantity of icons allowed in the updated first area is greater than the quantity of icons allowed in the original first area, or the display position of the first area in the target folder changes, the electronic device can display the sixth sub-icon in the second icon in the first area and adjust a size of the sixth sub-icon to the first size. In other words, the electronic device can dynamically adjust the quantity of application icons displayed in the first area based on the size of the first area, the quantity of icons allowed in the first area, or the display position of the first area in the target folder.

Optionally, in the embodiment of this application, the sixth sub-icon may be provided in one or in plurality.

Optionally, the sixth sub-icon may be the first N application icons or the first N rows of application icons in the second icon; or all application icons currently displayed in the second area.

For example, as shown in FIG. 7(A), the first area 11 in the target folder 10 includes 6 first icons, and the second area 12 includes 4 second icons. The user can perform a tap input for the form control 14 so that after the electronic device updates the target folder from the first form to the second form, as shown in FIG. 7(B), the electronic device can display, based on the size of the first area in the second folder 15 and the quantity of first icons allowed in the first area of the second folder 15 (that is, the first area of the second folder 15 contains 8 application icons (that is, application icons 1 to 8)), the application icons 7 and 8 of the second area in the first area according to the first size, and then based on the size of the second area in the second folder 15 and the quantity of second icons allowed in the second area of the second folder 15, the electronic device can display the undisplayed third icons (such as the application icons 11 and 12) in the second area according to the second size (that is, the second area in the second folder 15 contains 4 application icons (that is, the application icons 9 and 10)).

Step 703: The electronic device hides a seventh sub-icon in the second icon.

In the embodiment of this application, in a case that the size of the second area in the updated target folder is smaller than the size of the original second area, the quantity of icons allowed in the second area is smaller than the quantity of icons allowed in the original second area, or the display position of the second area in the target folder changes, the electronic device can cancel display of the seventh sub-icon in the second icon and hide it in the target folder, or cancel display of the second area so as to hide the seventh sub-icon in the target folder. In other words, the electronic device can dynamically adjust the quantity of application icons displayed in the second area or cancel display of the second area based on the size of the first area, the quantity of icons allowed in the first area, or the display position of the first area in the target folder.

Optionally, the seventh sub-icon may be the first N application icons or the first N rows of application icons in the second icon; or all application icons currently displayed in the second area.

For example, as shown in FIG. 8(A), the first area 11 in the target folder 10 includes 6 first icons, and the second area 12 includes 4 second icons. The user can perform a tap input for the form control 14 so that the electronic device can update the target folder from the first form to the second form. As shown in FIG. 8(b), after the target folder is updated from the first form to the second form, the target folder 10 includes only the first area 11, and the first area 11 includes 6 first icons. The electronic device cancels display of the second area, and hides the seventh sub-icon in the second area 12 (that is, the application icons 7 to 10) in the target folder.

In the embodiment of this application, the electronic device can adjust the application icons displayed in the first area and second area based on the size and form of the target folder. To be specific, the electronic device expands the target folder in multiple sizes by changing the shape of the target application icon, so that the quantities of first icons and second icons that can be directly opened can be adaptively changed according to the form and size of the target folder after the target folder is expanded, thus improving the efficiency of displaying the application programs in the target folder by the electronic device.

Optionally, in the embodiment of this application, the target folder includes a fifth icon, and the target folder does not display the fifth icon; and after the step 602, the application program startup method provided in the embodiment of this application further includes the following step 801.

Step 801: The electronic device displays the fifth icon in the second area according to the second form.

Optionally, in the embodiment of this application, the fifth icon may be an icon in a hidden state or not displayed.

Optionally, in the embodiment of this application, the fifth icon in a hidden state may be the fifth icon in a hidden area; and the hidden area has security permission. That is, after the user drags the fifth icon to the hidden area, the electronic device can automatically configure security permission for the fifth icon and hide the fifth icon.

Optionally, in the embodiment of this application, after the fifth icon is assigned security permission, the electronic device can display the fifth icon through face recognition, fingerprint recognition, password recognition, or voice recognition.

Optionally, in the embodiment of this application, in a case that the form of the target folder is updated to the second form, the electronic device can detect the size of the updated second area, the quantity of icons allowed in the updated second area, and the relative position of the updated second area. When it is detected that the size of the updated second area is larger than the original size, or the quantity of icons allowed in the updated second area is greater than the original quantity of icons allowed in the second area (that is, the quantity of icons allowed in the second area in the first form), or the relative position of the updated second area is obtained, the electronic device displays the hidden fifth icon in the second area, or displays the undisplayed fifth icon in the second area, or displays both the hidden fifth icon and the undisplayed fifth icon in the second area.

Optionally, in the embodiment of this application, the electronic device can dynamically adjust the hidden fifth icon according to the sizes, quantities of icons allowed, and relative positions of the first area and the second area (for example, in a case that the size of the second area is smaller than the original size or the quantity of icons allowed in the second area or the relative position of the second area changes, the electronic device may or may not add the fifth icon to the hidden area).

In the embodiment of this application, the electronic device can adjust the application icons displayed in the first area and second area based on the size and form of the target folder. To be specific, the electronic device expands the target folder in multiple sizes by changing the shape of the target application icon, so that the quantities of first icons and second icons that can be directly opened can be adaptively changed according to the form and size of the target folder after the target folder is expanded, thus improving the efficiency of displaying the application programs in the target folder by the electronic device.

Optionally, in the embodiment of this application, after the step 201, the application program startup method provided in the embodiment of this application further includes the following steps 901 and 902.

Step 901: The electronic device receives a fourth input for the target folder.

Step 902: In response to the fourth input, the electronic device displays an expansion screen of the target folder.

In the embodiment of this application, the expansion screen includes a fourth icon, where a size of the fourth icon is a third size; and the fourth icon includes at least one of the following: the first icon, the second icon, and the third icon.

In the embodiment of this application, based on the fourth input of the user, the electronic device can expand the target folder, and display all application icons in the target folder.

Optionally, in the embodiment of this application, the third size may be equal to the first size or equal to the second size; or the third size is equal to neither the first size nor the second size.

Optionally, in the embodiment of this application, the target folder may include an expansion control, and the user can perform a fourth input for the expansion control to trigger the electronic device to expand the target folder; or the user can perform a fourth input for the second icon in the second area to trigger the electronic device to expand the target folder; or the user can perform a fourth input for a blank area in the target folder to trigger the electronic device to expand the target folder.

Optionally, in the embodiment of this application, after the electronic device expands the target folder, the user can perform an edit operation on the application icon in the target folder.

Optionally, in the embodiment of this application, the edit operation may include at least one of the following: a sort operation, an add operation, and a delete operation.

Optionally, in the embodiment of this application, the delete operation may be specifically as follows: after the target folder is expanded, the user performs an input for the target icon in the target folder so that the electronic device moves the target icon out of the target folder and controls other application icons in the target folder to automatically fill in positions, and then the electronic device restores the target folder to a standard state (that is, a state when the target folder is not expanded).

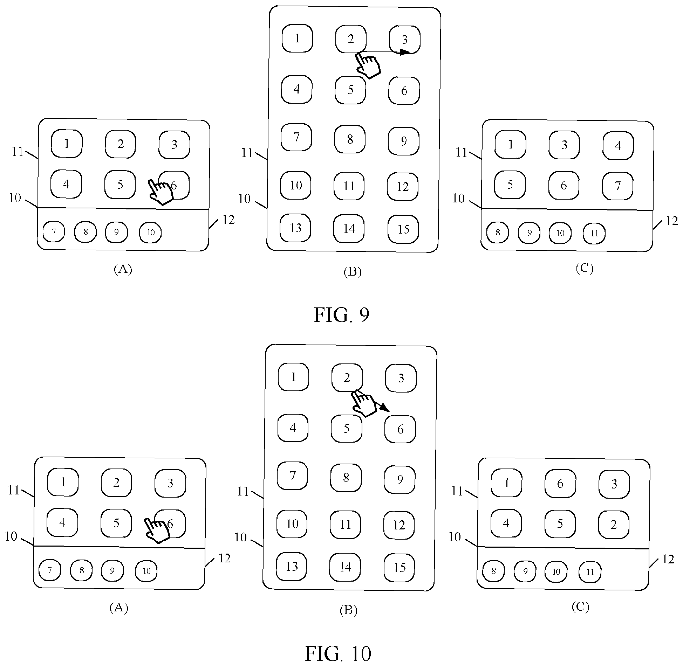

For example, as shown in FIG. 9(A), the user can perform a long-press input for the target folder to trigger the electronic device to expand the target folder for the user to operate the application icons in the target folder. As shown in FIG. 9(B), the target folder automatically extends and displays all the application icons in the target folder, so that the user can perform a drag input for application icon 2 to cause the electronic device to move application icon 2 out of the target folder. As shown in FIG. 9(C), after application icon 2 is moved out of the target folder, other application icons in the target folder are controlled to automatically fill in positions, and the target folder is restored to its original size (that is, the standard state mentioned above).

Optionally, in the embodiment of this application, the add operation may be specifically as follows: after the target folder is expanded, the user can perform an input for an application icon in the desktop/another folder to add the application icon to the target folder.

Optionally, in the embodiment of this application, the sort operation may be specifically as follows: after the target folder is expanded, the user can perform an input for the target icon in the target folder to adjust the position of the target icon in the target folder; or the target folder may include a sort control, and the user can perform an input for the sort control so that the electronic device sorts all the application icons in the target folder according to the second order.

For example, as shown in FIG. 10(A), the user can perform a long-press input for the target folder to trigger the electronic device to expand the target folder for the user to operate the application icons in the target folder. As shown in FIG. 10(B), the target folder automatically extends and displays all the application icons in the target folder, so that the user can drag application icon 2 to an icon position of application icon 6 to cause the electronic device to exchange icon positions of application icon 2 and application icon 6. As shown in FIG. 10(C), after the icon positions of application icon 2 and application icon 6 are exchanged, the electronic device can restore the target folder to its original size (that is, the standard state mentioned above).

It should be noted that in the embodiment of this application, the edit operations are all performed in a case that the target folder is not opened.

It can be understood that the edit operations can quickly implement position and sequence editing, addition, and deletion of the application icons in the target folder at a shallow level without entering the target folder, thus simplifying user operation and improving the efficiency and convenience of editing the application programs in the folder by the electronic device.

In the embodiment of this application, the user can perform the fourth input for the second area to expand the target folder, so that the user can perform an edit operation on the application icons in the target folder, thus simplifying the operation of editing the application icons in the target folder by the user, and improving the efficiency and convenience of editing the application programs in the folder by the electronic device.

Optionally, in the embodiment of this application, the target folder includes a sixth icon, and the target folder does not display the sixth icon; and after the step 201, the application program startup method provided in the embodiment of this application further includes the following steps 1001 and 1002.

Step 1001: The electronic device receives a sixth input for the target folder.

Step 1002: In response to the sixth input, the electronic device displays a first window.

In the embodiment of this application, the first window includes at least one sixth icon.

Optionally, in the embodiment of this application, the electronic device can display the first window at a preset position of the target folder (for example, a left edge area or a right edge area of the target folder), so that the user can view at least one hidden sixth icon in the target folder through the first window, allowing the user to quickly find the required application icon. Alternatively, the electronic device can display the first window at a preset position on the desktop (for example, a left outer edge area or a right outer edge area of the target folder), so that the user can view at least one hidden sixth icon in the target folder through the first window, allowing the user to quickly find the required application icon.

Optionally, in the embodiment of this application, the first window may be an application shortcut sidebar or a fixed area in the target folder/desktop.

Optionally, in the embodiment of this application, the electronic device can display a sign of the first window in the target folder, so that the user can perform an input for the sign of the first window to trigger the electronic device to open or hide the first window.

Optionally, in the embodiment of this application, the sign of the first window may be an image sign, an expression sign, a symbol sign, a letter sign, or the like, which can be specifically determined according to actual use requirements, and is not limited in the embodiments of this application.

It should be noted that for the execution timing of the above steps 1001 and 1002, reference may be made to the above steps 401 and 402, and details are not repeated herein.

In the embodiment of this application, the electronic device displays the first window based on the sixth input of the user, so as to show the hidden application icons in the target folder to the user. In this way, the user can quickly find the required application icon through the first window, thus simplifying the operation of finding application icons by the user, and improving the efficiency of finding application icons in the folder by the electronic device.

Optionally, in the embodiment of this application, after the step 201, the application program startup method provided in the embodiment of this application further includes the following steps 2001 and 2002.

Step 2001: The electronic device receives a seventh input for the target icon.

Step 2002: In response to the seventh input, the electronic device displays a second window.

In the embodiment of this application, the second window includes a seventh icon, where the target folder does not include the seventh icon, a type of an application program corresponding to the seventh icon is the same as a type of the application program corresponding to the target icon, and the target icon is the first icon or the second icon.

Optionally, in the embodiment of this application, the electronic device can display at least one second window in the target folder or on the desktop based on an application type corresponding to at least one target icon, where a seventh icon in each of the at least one second window corresponds to an application type corresponding to one target icon.

Optionally, in the embodiment of this application, the seventh icon may be an icon corresponding to a downloaded application program in the electronic device, or an application program (that is, an application program not downloaded) found by the electronic device in a third-party application program (for example, an application mall) based on a type of an application program corresponding to the target icon.

In the embodiment of this application, the electronic device can recommend application programs of the same type to the user based on the type of the target icon in the target folder, helping the user to quickly classify and sort out the target folder.

Optionally, in the embodiment of this application, after the step 2002, the application program startup method provided in the embodiment of this application further includes the following steps 3001 and 3002.

Step 3001: The electronic device receives an eighth input for an eighth icon.

Step 3002: In response to the eighth input, the electronic device displays the eighth icon in the target folder.

In the embodiment of this application, after the electronic device displays the second window, the user can perform an eighth input for the eighth icon in the second window, so that the eighth icon can be displayed in the target folder.

Optionally, in the embodiment of this application, the eighth icon can be displayed in a preset position in the target folder (for example, an empty display area of the target folder); or the eighth icon can be displayed in the target folder based on a stop position of the eighth input.

In the embodiment of this application, the electronic device can add the eighth icon to the target folder based on the input of the user for the eighth icon in the second window. That is, the electronic device can display the same type of application programs in the target folder based on the user input, helping the user to quickly classify and sort out the target folder.

Optionally, in the embodiment of this application, the foregoing first input to eighth input may each be at least one of the following: tap input, long-press input, heavy-press input, preset trajectory input, physical button combination input (such as the power button and volume button), or any possible form of input, which can be specifically determined according to actual use requirements, and is not limited in the embodiments of this application.

It should be noted that the application program startup method provided in the embodiments of this application may be executed by an application program startup apparatus. In the embodiments of this application, the application program startup apparatus provided in the embodiments of this application is described by using an example in which the application program startup apparatus performs the application program startup method.

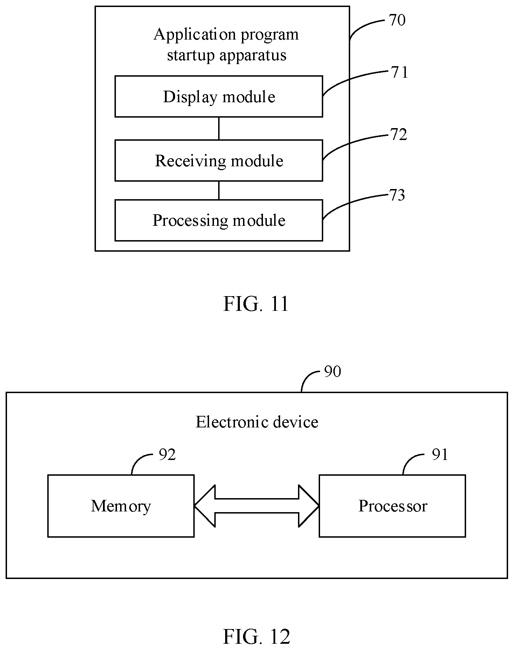

FIG. 11 is a possible schematic structural diagram of an application program startup apparatus in an embodiment of this application. As shown in FIG. 11, the application program startup apparatus 70 may include: a display module 71, a receiving module 72, and a processing module 73.

The display module 71 is configured to display a target folder, where a first area of the target folder displays a first icon, and a second area of the target folder displays a second icon. The receiving module 72 is configured to receive a first input for a target icon. The processing module 73 is configured to: in a case that the first icon includes the target icon, in response to the first input received by the receiving module 72, display a first screen of an application program corresponding to the target icon; or in a case that the second icon includes the target icon, in response to the first input received by the receiving module 72, display an expansion screen of the target folder.

In a possible implementation, the target folder includes a third icon, and the target folder does not display the third icon; and the receiving module 72 is further configured to receive a second input for a first sub-icon in the first icon. The display module 71 is further configured to: in response to the second input received by the receiving module 72, cancel display of the first sub-icon, display a second sub-icon in the second icon at a first position, and display the third icon at a second position; where the first position is a display position of the first sub-icon before the display is canceled, and the second position is a display position of the second sub-icon in the second area.

In a possible implementation, a size of the first icon is a first size, and a size of the second icon is a second size; and the display module 71 is specifically configured to: display the second sub-icon in the second icon at the first position, and adjust a size of the second sub-icon to the first size; and display the third icon at the second position, and adjust a size of the third icon to the second size.

In a possible implementation, the receiving module 72 is further configured to: after the display module 71 displays the target folder, receive a third input for a third sub-icon in the first icon. The display module 71 is further configured to: in response to the third input received by the receiving module 72, cancel display of the third sub-icon, display a fourth sub-icon in the second icon at a third position, adjust a size of the fourth sub-icon to the first size, display the third sub-icon at a fourth position, and adjust a size of the third sub-icon to the second size; where the third position is a display position of the third sub-icon before the display is canceled, and the fourth position is a display position of the fourth sub-icon in the second area.

In a possible implementation, the receiving module 72 is further configured to: after the display module 71 displays the target folder, receive a fourth input for the target folder. The display module 71 is further configured to: in response to the fourth input received by the receiving module 72, display an expansion screen of the target folder, where the expansion screen includes a fourth icon, and a size of the fourth icon is a third size; and the fourth icon includes at least one of the following: the first icon, the second icon, and the third icon.

In a possible implementation, a form of the target folder is a first form, and the application program startup apparatus according to the embodiment of this application further includes an adjustment module. The receiving module 72 is further configured to: after the display module 71 displays the target folder, receive a fifth input for the target folder. The adjustment module is configured to: in response to the fifth input received by the receiving module 72, adjust the form of the target folder to a second form; where
the form includes at least one of the following: a size of the target folder, a size of the first area of the target folder, a size of the second area of the target folder, a quantity of icons allowed in the first area of the target folder, a quantity of icons allowed in the second area of the target folder, a position of the first area in a display area of the target folder, and a position of the second area in the display area of the target folder.

In a possible implementation, the application program startup apparatus according to the embodiment of this application further includes an update module. The update module is configured to: after the adjustment module adjusts the form of the target folder to the second form, update a display position of a fifth sub-icon in the first icon to the second area based on the second form; or update a display position of a sixth sub-icon in the second icon to the first area; or hide a seventh sub-icon in the second icon.

In a possible implementation, the target folder includes a fifth icon, and the target folder does not display the fifth icon; and the display module 71 is further configured to: after the adjustment module adjusts the form of the target folder to the second form, display the fifth icon in the second area based on the second form.

In a possible implementation, the target folder includes a sixth icon, and the target folder does not display the sixth icon; and the receiving module 72 is further configured to: after the display module 71 displays the target folder, receive a sixth input for the target folder. The display module 71 is further configured to: in response to the sixth input received by the receiving module 72, display a first window, where the first window includes at least one sixth icon.

In a possible implementation, the receiving module 72 is further configured to: after the display module 71 displays the target folder, receive a seventh input for the target icon. The display module 71 is further configured to: in response to the seventh input received by the receiving module 72, display a second window, where the second window includes a seventh icon, where the target folder does not include the seventh icon, a type of an application program corresponding to the seventh icon is the same as a type of the application program corresponding to the target icon, and the target icon is the first icon or the second icon.

In a possible implementation, the receiving module 72 is further configured to: after the display module 71 displays the second window, receive an eighth input for an eighth icon. The display module 71 is further configured to: in response to the eighth input received by the receiving module 72, display the eighth icon in the target folder.

According to the application program startup apparatus in the embodiment of this application, when the application program startup apparatus displays the target folder, the target folder can be displayed in the form of the first area and the second area, so as to indicate to the user the application signs for directly starting the application programs. In this way, the user can directly perform the first input for an application icon (such as the target icon) in the first area of the target folder to cause the application program startup apparatus to directly start the application program indicated by the target application icon, instead of opening the folder first and then performing an input for the application icon in the folder to cause the application program startup apparatus to start the application program. This simplifies the operation of starting the application program by the user, saving time, and improving the efficiency and convenience of starting the application program in the folder by the application program startup apparatus.

The application program startup apparatus in the embodiment of this application may be an apparatus, or may be a component, an integrated circuit, or a chip in an electronic device. The apparatus may be a mobile electronic device or a non-mobile electronic device. For example, the electronic device may be a mobile phone, a tablet computer, a notebook computer, a palmtop computer, a vehicle-mounted electronic device, a mobile internet device (Mobile Internet Device, MID), an augmented reality (augmented reality, AR)/virtual reality (virtual reality, VR) device, a robot, a wearable device, an ultra-mobile personal computer (ultra-mobile personal computer, UMPC), a netbook, or a personal digital assistant (personal digital assistant, PDA), or may be a server, a network attached storage (Network Attached Storage, NAS), a personal computer (personal computer, PC), a television (television, TV), a teller machine, a self-service machine, or the like. This is not specifically limited in the embodiments of this application.

The application program startup apparatus in the embodiment of this application may be an apparatus having an operating system. The operating system may be an android (Android) operating system, an iOS operating system, or another possible operating system. This is not specifically limited in the embodiments of this application.

The application program startup apparatus in the embodiment of this application can implement the processes implemented in the method embodiments in FIGs. 1 to 10. To avoid repetition, details are not described herein again.

Optionally, as shown in FIG. 12, an embodiment of this application further provides an electronic device 90 including a processor 91 and a memory 92. The memory 92 stores a program or instructions capable of running on the processor 91. When the program or instructions are executed by the processor 91, the steps of the foregoing embodiments of the application program startup method are implemented, with the same technical effects achieved. To avoid repetition, details are not described herein again.

It should be noted that the electronic device in the embodiment of this application includes the foregoing mobile electronic device and non-mobile electronic device.

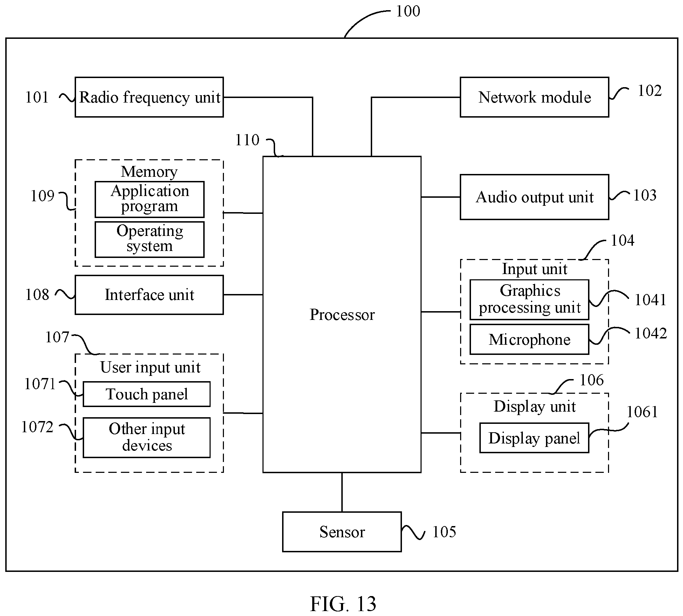

FIG. 13 is a schematic diagram of a hardware structure of an electronic device according to an embodiment of this application.

The electronic device 100 includes but is not limited to components such as a radio frequency unit 101, a network module 102, an audio output unit 103, an input unit 104, a sensor 105, a display unit 106, a user input unit 107, an interface unit 108, a memory 109, and a processor 110.

Those skilled in the art can understand that the electronic device 100 may further include a power supply (for example, a battery) that supplies power to various components. The power supply may be logically connected to the processor 110 through a power management system, so that functions such as charge and discharge management and power consumption management are implemented by using the power management system. The structure of the electronic device shown in FIG. 13 does not constitute a limitation on the electronic device. The electronic device may include more or fewer components than shown in the figure, or some components may be combined, or there may be a different component layout. Details are not described herein again.

The display unit 106 is configured to display a target folder, where a first area of the target folder displays a first icon, and a second area of the target folder displays a second icon. The user input unit 107 is configured to receive a first input for a target icon. The processor 110 is configured to: in a case that the first icon includes the target icon, in response to the first input, display a first screen of an application program corresponding to the target icon; or in a case that the second icon includes the target icon, in response to the first input, display an expansion screen of the target folder.

According to the electronic device in the embodiment of this application, when the electronic device displays the target folder, the target folder can be displayed in the form of the first area and the second area, so as to indicate to a user the application signs for directly starting application programs. In this way, the user can directly perform the first input for an application icon (such as the target icon) in the first area of the target folder to cause the electronic device to directly start the application program indicated by the target application icon, instead of opening the folder first and then performing an input for the application icon in the folder to cause the electronic device to start the application program. This simplifies the operation of starting the application program by the user, saving time, and improving the efficiency and convenience of starting the application program in the folder by the electronic device.

Optionally, in the embodiment of this application, the target folder includes a third icon, and the target folder does not display the third icon; and the user input unit 107 is further configured to receive a second input for a first sub-icon in the first icon. The display unit 106 is further configured to: in response to the second input, cancel display of the first sub-icon, display a second sub-icon in the second icon at a first position, and display the third icon at a second position; where the first position is a display position of the first sub-icon before the display is canceled, and the second position is a display position of the second sub-icon in the second area.

Optionally, in the embodiment of this application, a size of the first icon is a first size, and a size of the second icon is a second size; and the display unit 106 is specifically configured to: display the second sub-icon in the second icon at the first position, and adjust a size of the second sub-icon to the first size; and display the third icon at the second position, and adjust a size of the third icon to the second size.

Optionally, in the embodiment of this application, the user input unit 107 is further configured to: after the target folder is displayed, receive a third input for a third sub-icon in the first icon. The display unit 106 is further configured to: in response to the third input, cancel display of the third sub-icon, display a fourth sub-icon in the second icon at a third position, adjust a size of the fourth sub-icon to the first size, display the third sub-icon at a fourth position, and adjust a size of the third sub-icon to the second size; where the third position is a display position of the third sub-icon before the display is canceled, and the fourth position is a display position of the fourth sub-icon in the second area.

Optionally, in the embodiment of this application, the user input unit 107 is further configured to: after the target folder is displayed, receive a fourth input for the target folder. The display unit 106 is further configured to: in response to the fourth input, display the expansion screen of the target folder, where the expansion screen includes a fourth icon, and a size of the fourth icon is a third size; and the fourth icon includes at least one of the following: the first icon, the second icon, and the third icon.

Optionally, in the embodiment of this application, a form of the target folder is a first form, and the user input unit 107 is further configured to: after the target folder is displayed, receive a fifth input for the target folder. The processor 110 is further configured to: in response to the fifth input, adjust the form of the target folder to a second form; where the form includes at least one of the following: a size of the target folder, a size of the first area of the target folder, a size of the second area of the target folder, a quantity of icons allowed in the first area of the target folder, a quantity of icons allowed in the second area of the target folder, a position of the first area in a display area of the target folder, and a position of the second area in the display area of the target folder.

Optionally, in the embodiment of this application, the processor 110 is further configured to: after adjusting the form of the target folder to the second form, update a display position of a fifth sub-icon in the first icon to the second area based on the second form; or update a display position of a sixth sub-icon in the second icon to the first area; or hide a seventh sub-icon in the second icon.

Optionally, in the embodiment of this application, the target folder includes a fifth icon, and the target folder does not display the fifth icon; and the display unit 106 is further configured to: after the form of the target folder is adjusted to the second form, display the fifth icon in the second area based on the second form.

Optionally, in the embodiment of this application, the target folder includes a sixth icon, and the target folder does not display the sixth icon; and the user input unit 107 is further configured to: after the target folder is displayed, receive a sixth input for the target folder. The display unit 106 is further configured to: in response to the sixth input, display a first window, where the first window includes at least one sixth icon.

Optionally, in the embodiment of this application, the user input unit 107 is further configured to: after the target folder is displayed, receive a seventh input for the target icon. The display unit 106 is further configured to: in response to the seventh input, display a second window, where the second window includes a seventh icon, where the target folder does not include the seventh icon, a type of an application program corresponding to the seventh icon is the same as a type of the application program corresponding to the target icon, and the target icon is the first icon or the second icon.

Optionally, in the embodiment of this application, the user input unit 107 is further configured to: after the second window is displayed, receive an eighth input for an eighth icon. The display unit 106 is further configured to: in response to the eighth input, display the eighth icon in the target folder.

The electronic device provided in the embodiment of this application can implement the processes implemented in the foregoing method embodiments, with the same technical effects achieved. To avoid repetition, details are not repeated herein.

For the beneficial effects of various implementations in this embodiment, reference may be made to the beneficial effects of the corresponding implementations in the foregoing method embodiments, and details are not described herein to avoid repetition.

It should be understood that in this embodiment of this application, the input unit 104 may include a graphics processing unit (Graphics Processing Unit, GPU) 1041 and a microphone 1042. The graphics processing unit 1041 processes image data of a static picture or a video that is obtained by an image capture apparatus (for example, a camera) in a video capture mode or an image capture mode. The display unit 106 may include a display panel 1061. The display panel 1061 may be configured in a form of a liquid crystal display, an organic light-emitting diode display, or the like. The user input unit 107 includes at least one of a touch panel 1071 and other input devices 1072. The touch panel 1071 is also referred to as a touchscreen. The touch panel 1071 may include two parts: a touch detection apparatus and a touch controller. Specifically, the other input devices 1072 may include but are not limited to a physical keyboard, a function button (for example, volume control button or on/off button), a trackball, a mouse, and a joystick. Details are not described herein.

The memory 109 may be configured to store software programs and various data. The memory 109 may include a first storage area for storing programs or instructions and a second storage area for storing data. The first storage area may store an operating system, an application program or instructions required by at least one function (for example, a sound play function or an image play function), and the like. Additionally, the memory 109 may be a volatile memory or a non-volatile memory, or the memory 109 may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchronous link dynamic random access memory (Synch link DRAM, SLDRAM), and a direct rambus random access memory (Direct Rambus RAM, DRRAM). The memory 109 in the embodiments of this application includes but is not limited to these or any other applicable types of memories.

The processor 110 may include one or more processing units. Optionally, the processor 110 may integrate an application processor and a modem processor. The application processor primarily processes operations involving an operating system, user interface, application program, or the like. The modem processor primarily processes radio communication signals, for example, being a baseband processor. It can be understood that the modem processor may alternatively be not integrated in the processor 110.

An embodiment of this application further provides a readable storage medium. The readable storage medium stores a program or instructions, and when the program or instructions are executed by a processor, the processes of the foregoing method embodiments are implemented, with the same technical effects achieved. To avoid repetition, details are not described herein again.

The processor is the processor in the electronic device in the foregoing embodiments. The readable storage medium includes a computer-readable storage medium such as a computer read-only memory ROM, a random access memory RAM, a magnetic disk, or an optical disc.

Another embodiment of this application provides a chip. The chip includes a processor and a communication interface, the communication interface is coupled to the processor, and the processor is configured to run a program or instructions to implement the processes of the foregoing method embodiments, with the same technical effects achieved. To avoid repetition, details are not described herein again.

It should be understood that the chip mentioned in the embodiments of this application may also be referred to as a system-level chip, a system chip, a chip system, a system-on-chip, or the like.

An embodiment of this application further provides a computer program product. The program product is stored in a storage medium. The program product is executed by at least one processor to implement the processes of the foregoing embodiments of the application program startup method, with the same technical effects achieved. To avoid repetition, details are not described herein again.

It should be noted that in this specification, the terms "include" and "comprise", or any of their variants are intended to cover a non-exclusive inclusion, such that a process, method, article, or apparatus that includes a list of elements not only includes those elements but also includes other elements that are not expressly listed, or further includes elements inherent to such process, method, article, or apparatus. In absence of more constraints, an element preceded by "includes a..." does not preclude the existence of other identical elements in the process, method, article, or apparatus that includes the element. Furthermore, it should be noted that the scope of the method and apparatus in the embodiments of this application is not limited to performing the functions in the order shown or discussed, but may also include performing the functions in a substantially simultaneous manner or in a reverse order depending on the functions involved. For example, the described method may be performed in an order different from the order described, and steps may be added, omitted, or combined. In addition, features described with reference to some examples may be combined in other examples.

Based on the above description of embodiments, persons skilled in the art can clearly understand that the method in the foregoing embodiments can be implemented through software on a necessary hardware platform or certainly through hardware only, but in many cases, the former is the more preferred implementation. Based on such an understanding, the technical solutions of this application essentially, or the part contributing to the prior art may be implemented in a form of a computer software product. The computer software product is stored in a storage medium (for example, a ROM/RAM, a magnetic disk, or an optical disc), and includes several instructions for instructing a terminal (which may be a mobile phone, a computer, a server, a network device, or the like) to perform the method described in the embodiments of this application.

The foregoing describes the embodiments of this application with reference to the accompanying drawings. However, this application is not limited to the foregoing specific embodiments. The foregoing specific embodiments are merely illustrative rather than restrictive. As instructed by this application, persons of ordinary skill in the art may develop many other forms without departing from the principle of this application and the protection scope of the claims, and all such forms fall within the protection scope of this application.

## Claims

1. An application program startup method, wherein the method comprises:
displaying a target folder, wherein a first area of the target folder displays a first icon, and a second area of the target folder displays a second icon;
receiving a first input for a target icon; and
in a case that the first icon comprises the target icon, in response to the first input, displaying a first screen of an application program corresponding to the target icon; or
in a case that the second icon comprises the target icon, in response to the first input, displaying an expansion screen of the target folder.

2. The method according to claim 1, wherein the target folder comprises a third icon, the target folder does not display the third icon, and the method further comprises:
receiving a second input for a first sub-icon in the first icon; and
in response to the second input, canceling display of the first sub-icon, displaying a second sub-icon in the second icon at a first position, and displaying the third icon at a second position; wherein
the first position is a display position of the first sub-icon before the display is canceled, and the second position is a display position of the second sub-icon in the second area.

3. The method according to claim 2, wherein a size of the first icon is a first size, and a size of the second icon is a second size; and
the displaying a second sub-icon in the second icon at a first position, and displaying the third icon at a second position comprises:
displaying the second sub-icon in the second icon at the first position, and adjusting a size of the second sub-icon to the first size; and
displaying the third icon at the second position, and adjusting a size of the third icon to the second size.

4. The method according to claim 3, wherein after the displaying a target folder, the method further comprises:
receiving a third input for a third sub-icon in the first icon; and
in response to the third input, canceling display of the third sub-icon, displaying a fourth sub-icon in the second icon at a third position, adjusting a size of the fourth sub-icon to the first size, displaying the third sub-icon at a fourth position, and adjusting a size of the third sub-icon to the second size; wherein
the third position is a display position of the third sub-icon before the display is canceled, and the fourth position is a display position of the fourth sub-icon in the second area.

5. The method according to claim 1, wherein after the displaying a target folder, the method further comprises:
receiving a fourth input for the target folder; and
in response to the fourth input, displaying the expansion screen of the target folder, wherein the expansion screen comprises a fourth icon, and a size of the fourth icon is a third size; and
the fourth icon comprises at least one of the following: the first icon, the second icon, and the third icon.

6. The method according to claim 1, wherein a form of the target folder is a first form, and after the displaying a target folder, the method further comprises:
receiving a fifth input for the target folder; and
in response to the fifth input, adjusting the form of the target folder to a second form; wherein
the form comprises at least one of the following:
a size of the target folder;
a size of the first area of the target folder;
a size of the second area of the target folder;
a quantity of icons allowed in the first area of the target folder;
a quantity of icons allowed in the second area of the target folder;
a position of the first area in a display area of the target folder; and
a position of the second area in the display area of the target folder.

7. The method according to claim 6, wherein after the adjusting the form of the target folder to a second form, the method further comprises:
updating a display position of a fifth sub-icon in the first icon to the second area based on the second form; or
updating a display position of a sixth sub-icon in the second icon to the first area; or
hiding a seventh sub-icon in the second icon.

8. The method according to claim 6, wherein the target folder comprises a fifth icon, the target folder does not display the fifth icon, and after the adjusting the form of the target folder to a second form, the method further comprises:
displaying the fifth icon in the second area based on the second form.

9. The method according to claim 1, wherein the target folder comprises a sixth icon, the target folder does not display the sixth icon, and after the displaying a target folder, the method further comprises:
receiving a sixth input for the target folder; and
in response to the sixth input, displaying a first window, wherein the first window comprises at least one sixth icon.

10. The method according to claim 1, wherein after the displaying a target folder, the method further comprises:
receiving a seventh input for the target icon; and
in response to the seventh input, displaying a second window, wherein the second window comprises a seventh icon; wherein
the target folder does not comprise the seventh icon, a type of an application program corresponding to the seventh icon is the same as a type of the application program corresponding to the target icon, and the target icon is the first icon or the second icon.

11. The method according to claim 10, wherein after the displaying a second window, the method further comprises:
receiving an eighth input for an eighth icon; and
in response to the eighth input, displaying the eighth icon in the target folder.

12. An application program startup apparatus, wherein the application program startup apparatus comprises: a display module, a receiving module, and a processing module; wherein
the display module is configured to display a target folder, wherein a first area of the target folder displays a first icon, and a second area of the target folder displays a second icon;
the receiving module is configured to receive a first input for a target icon; and
the processing module is configured to: in a case that the first icon comprises the target icon, in response to the first input received by the receiving module, display a first screen of an application program corresponding to the target icon; or in a case that the second icon comprises the target icon, in response to the first input received by the receiving module, display an expansion screen of the target folder.

13. The apparatus according to claim 12, wherein the target folder comprises a third icon, and the target folder does not display the third icon;
the receiving module is further configured to receive a second input for a first sub-icon in the first icon; and
the display module is further configured to: in response to the second input received by the receiving module, cancel display of the first sub-icon, display a second sub-icon in the second icon at a first position, and display the third icon at a second position; wherein
the first position is a display position of the first sub-icon before the display is canceled, and the second position is a display position of the second sub-icon in the second area.

14. The apparatus according to claim 13, wherein a size of the first icon is a first size, and a size of the second icon is a second size; and
the display module is specifically configured to: display the second sub-icon in the second icon at the first position, and adjust a size of the second sub-icon to the first size; and display the third icon at the second position, and adjust a size of the third icon to the second size.

15. The apparatus according to claim 14, wherein
the receiving module is further configured to: after the display module displays the target folder, receive a third input for a third sub-icon in the first icon; and
the display module is further configured to: in response to the third input received by the receiving module, cancel display of the third sub-icon, display a fourth sub-icon in the second icon at a third position, adjust a size of the fourth sub-icon to the first size, display the third sub-icon at a fourth position, and adjust a size of the third sub-icon to the second size; wherein
the third position is a display position of the third sub-icon before the display is canceled, and the fourth position is a display position of the fourth sub-icon in the second area.

16. The apparatus according to claim 12, wherein
the receiving module is further configured to: after the display module displays the target folder, receive a fourth input for the target folder; and
the display module is further configured to: in response to the fourth input received by the receiving module, display an expansion screen of the target folder, wherein the expansion screen comprises a fourth icon, and a size of the fourth icon is a third size; and
the fourth icon comprises at least one of the following: the first icon, the second icon, and the third icon.

17. The apparatus according to claim 12, wherein a form of the target folder is a first form, and the application program startup apparatus further comprises an adjustment module; wherein
the receiving module is further configured to: after the display module displays the target folder, receive a fifth input for the target folder; and
the adjustment module is configured to: in response to the fifth input received by the receiving module, adjust the form of the target folder to a second form; wherein
the form comprises at least one of the following:
a size of the target folder;
a size of the first area of the target folder;
a size of the second area of the target folder;
a quantity of icons allowed in the first area of the target folder;
a quantity of icons allowed in the second area of the target folder;
a position of the first area in a display area of the target folder; and
a position of the second area in the display area of the target folder.

18. The apparatus according to claim 17, wherein the application program startup apparatus further comprises an update module; wherein
the update module is configured to: after the adjustment module adjusts the form of the target folder to the second form, update a display position of a fifth sub-icon in the first icon to the second area based on the second form; or
update a display position of a sixth sub-icon in the second icon to the first area; or
hide a seventh sub-icon in the second icon.

19. The apparatus according to claim 17, wherein the target folder comprises a fifth icon, and the target folder does not display the fifth icon; and
the display module is further configured to: after the adjustment module adjusts the form of the target folder to the second form, display the fifth icon in the second area based on the second form.

20. The apparatus according to claim 12, wherein the target folder comprises a sixth icon, and the target folder does not display the sixth icon;
the receiving module is further configured to: after the display module displays the target folder, receive a sixth input for the target folder; and
the display module is further configured to: in response to the sixth input received by the receiving module, display a first window, wherein the first window comprises at least one sixth icon.

21. The apparatus according to claim 12, wherein
the receiving module is further configured to: after the display module displays the target folder, receive a seventh input for the target icon; and
the display module is further configured to: in response to the seventh input received by the receiving module, display a second window, wherein the second window comprises a seventh icon; wherein
the target folder does not comprise the seventh icon, a type of an application program corresponding to the seventh icon is the same as a type of the application program corresponding to the target icon, and the target icon is the first icon or the second icon.

22. The apparatus according to claim 21, wherein
the receiving module is further configured to: after the display module displays the second window, receive an eighth input for the eighth icon; and
the display module is further configured to: in response to the eighth input received by the receiving module, display the eighth icon in the target folder.

23. An electronic device, comprising a processor, a memory, and a program or instructions stored in the memory and capable of running on the processor, wherein when the program or instructions are executed by the processor, the steps of the application program startup method according to any one of claims 1 to 11 are implemented.

24. A readable storage medium, wherein the readable storage medium stores a program or instructions, and when the program or instructions are executed by a processor, the steps of the application program startup method according to any one of claims 1 to 11 are implemented.
